# EUROPEAN PATENT APPLICATION

(11) **EP 4 556 962 A1**
(43) Date of publication of application: **21.05.2025**
(21) Application number: 24212497.2
(22) Date of filing: 12.11.2024
(51) Int. Cl.: G02B 1/00, G02B 5/124, G02B 30/56

(54) **DISPLAY DEVICE**

(30) Priority: 20.11.2023 JP 2023196457
(71) Applicant: Alps Alpine Co., Ltd., Ota-ku, Tokyo 145-8501 (JP)
(72) Inventor: Yuza, Shingo, Iwaki, Fukushima (JP); Murata, Akitomo, Iwaki, Fukushima (JP)
(74) Representative: Schmitt-Nilson Schraud Waibel Wohlfrom Patentanwälte Partnerschaft mbB

(57) **Abstract**

A display device capable of displaying an aerial image by using retroreflection, the display device includes: an optical member configured to transmit a part of incident light and to reflect the rest; a retroreflective member which is arranged so as to face the optical member and having a notch or an opening for generating a design of an original image of an aerial image; a light source configured to illuminate the retroreflective member from a back surface side; and a transparent intermediate layer that is arranged between the optical member and the retroreflective member having a material with a refractive index of less than 1.

## Description

The present disclosure relates to a display device having a function of displaying an image in the air by using retroreflection.

Aerial imaging by retro-reflection (AIRR) is known. For example, JP 2018-81138 A discloses a display device including a half mirror, an image output device configured to output light toward one surface of the half mirror, and a retroreflective member that is disposed between the image output device and the half mirror and has a plurality of openings. JP 2022-140264 A discloses an aerial display device including a planar light emitter including a light emitting part; a retroreflective sheet that is disposed on a light-emitting surface side of the planar light emitter and includes a plurality of through holes representing a figure to be displayed in the air at positions corresponding to the light emitting part; and a half mirror disposed on a light-reflecting surface side of the retroreflective sheet.

The present disclosure relates to a display device according to the appended claims. Embodiments are disclosed in the dependent claims. A display device according to an aspect of the present disclosure, that is capable of displaying an aerial image by using retroreflection includes: an optical member configured to transmit a part of incident light and to reflect the rest; a retroreflective member which is arranged so as to face the optical member and having notches or openings for generating a design of an original image of the aerial image are formed; a light source configured to illuminate the retroreflective member from a back surface side; and a transparent intermediate layer which is arranged between the optical member and the retroreflective member having a material with a refractive index of less than 1.

In one embodiment, the transparent intermediate layer is formed of a metamaterial. In one embodiment, the aerial image is displayed at a position floating over the optical member at a floating distance corresponding to the refractive index of the transparent intermediate layer. In one embodiment, the optical member is a half mirror, a beam splitter, or a polarized beam splitter.
FIG. 1A is a plan view of an existing aerial-image display device;
FIG. 1B is a schematic cross-sectional view taken along a line A-A in FIG. 1A;
FIG. 2 is a schematic cross-sectional view of an aerial-image display device according to an embodiment of the present disclosure; and
FIG. 3 is a diagram illustrating simulation results of an aerial image generated by an existing aerial-image display device and of an aerial image generated by the aerial-image display device of the embodiment of the present disclosure.

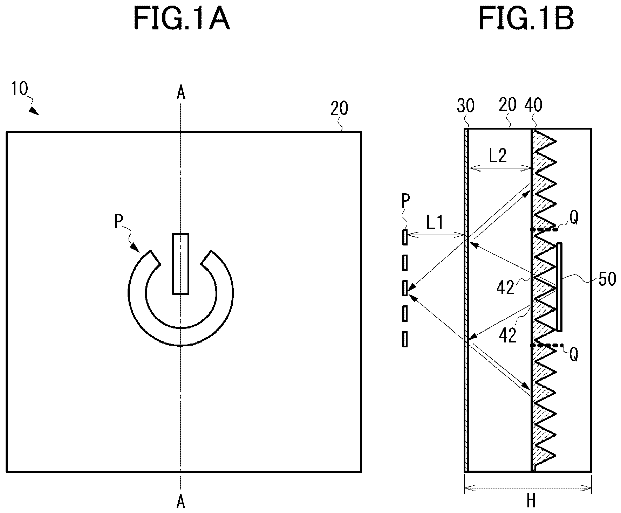

An aerial display system that uses the AIRR utilizes LEDs as a light source to display a fixed display pattern in the air. In such a display device, optical components are arranged so as to face each other in order to achieve miniaturization and thinning, and an example of the configuration is as illustrated in FIGS. 1A and 1B.

FIG. 1A is a schematic plan view of an existing aerial-image display device, and FIG. 1B is a schematic cross-sectional view taken along a line A-A in FIG. 1A. An aerial-image display device 10 includes a beam splitter 30 mounted on a front surface of a rectangular housing 20, a retroreflective sheet 40 disposed inside the housing 20 so as to face the beam splitter 30, and a light source 50 such as an LED or the like. Notches or openings 42 are formed in the retroreflective sheet 40, and the notches 42 generate a design (fixed display pattern) Q as an original image of an aerial image P. The aerial image P in FIG. 1A exemplifies an icon representing power on/off of a device.

When the retroreflective sheet 40 is illuminated by the light source 50 from a back surface side thereof, light passing through the notches 42 is retroreflected between the retroreflective sheet 40 and the beam splitter 30, and the aerial image P of the design Q is displayed at a position floating over the housing 20. A floating distance L1 of the aerial image P is equivalent to a distance L2 between the retroreflective sheet 40 (or the design Q) and the beam splitter 30. When the distance L2 is shortened in order to reduce a height H of the housing 20, there is an issue that the floating distance L1 of the aerial image P is shortened and the feeling that the aerial image P is floating is reduced.

The present disclosure provides a display device capable of reducing the thickness thereof while maintaining the floating distance of the aerial image.

The display device according to an aspect of the present disclosure displays an aerial image that is visible without wearing special glasses or the like, by using retroreflection in a three-dimensional space. It should be noted that drawings referred to in the following description of embodiments include exaggerated representations to facilitate understanding of the disclosure and do not directly represent a shape and a scale of an actual product.

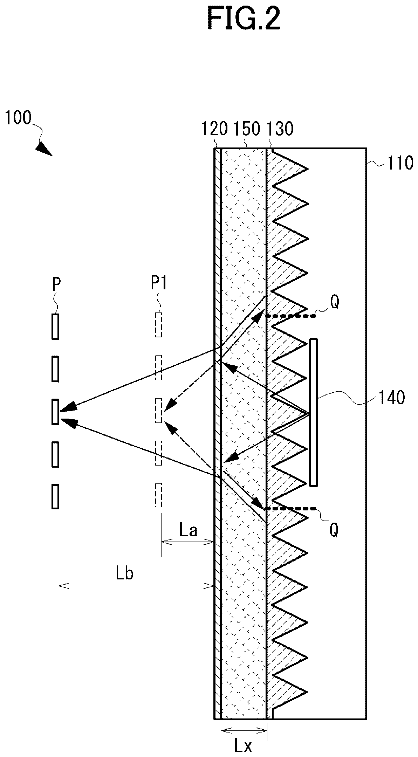

Next, an embodiment of the present disclosure will be described in detail. FIG. 2 is a schematic cross-sectional view of an aerial-image display device according to an embodiment of the present disclosure, and this cross-sectional view conceptually corresponds to a section taken along the line A-A in FIG. 1A.

An aerial-image display device 100 of the present embodiment includes, for example, a rectangular housing 110, a beam splitter 120 mounted on a front surface of the housing 110, a retroreflective sheet 130 mounted in the housing 110 so as to face the beam splitter 120, a light source 140 arranged on a back surface side of the retroreflective sheet 130, and a metamaterial layer 150 arranged so as to fill a space between the beam splitter 120 and the retroreflective sheet 130.

The beam splitter 120 is an optical member configured to transmit a part of incident light and to reflect the rest, that is, an optical member configured to separate the incident light into transmitted light and reflected light at a fixed ratio. The beam splitter 120 is, for example, a half mirror. When polarized light is used, a polarized beam splitter is used as the beam splitter 120.

The retroreflective sheet 130 is disposed so as to face the beam splitter 120. The retroreflective sheet 130 is an optical member that reflects light in a same direction as the incident light, and is composed of, for example, a prismatic retroreflective element such as a triangular pyramid retroreflective element or a full cube corner retroreflective element, or a bead retroreflective element.

Although the shape and size of the retroreflective sheet 130 are not particularly limited, notches or openings are formed in the retroreflective sheet 130 for generating the design Q that is an original image of the aerial image P. For example, as illustrated in FIG. 1A, the design Q is an icon representing power on/off. However, any type of designs (characters, icons, etc.) and any number of designs may be formed on the retroreflective sheet 130.

The light source 140 is disposed on the back surface side of the retroreflective sheet 130. The light source 140 is not particularly limited, but may be, for example, an LED light source, a display light source such as a liquid crystal display, or a projection light source such as a projector. When the LED light source is used, for example, a plurality of LEDs may be arranged in a linear or planar shape to irradiate an entire back surface of the retroreflective sheet 130 efficiently and uniformly with light. Further, a diffusion plate or a diffusion sheet may be used together to irradiate the back surface of the retroreflective sheet 130 uniformly with light.

A transparent material having a refractive index of smaller than 1, that is, the metamaterial layer 150, is filled between or arranged between the beam splitter 120 and the retroreflective sheet 130. The metamaterial layer 150 is formed with a substantially uniform film thickness such that its upper surface contacts the beam splitter 120 and its lower surface contacts the retroreflective sheet 130. However, the metamaterial layer 150 is not particularly limited in its film thickness or shape.

The metamaterial is an artificial substance or an artificial material having a behavior not found in natural materials, and in this case, has a property of having a refractive index of smaller than 1. Generally, the metamaterial has a periodic arrangement of fine structures and patterns, which makes it possible to control refraction of light. Components of a typical metamaterial include, for example, metals, dielectrics, magnetic materials, carbon nanotubes, metal nanowires, silicon, and plastics. By interposing the metamaterial layer 150, the refractive angle of the light transmitted through the beam splitter 120 can be made smaller than the refractive index of the air layer in which the metamaterial layer 150 does not exist.

Next, operation of the aerial-image display device 100 according to the present embodiment will be described. The back surface of the retroreflective sheet 130 is irradiated with light from the light source 140, and then this light passes through notches or openings formed in the retroreflective sheet 130, thereby generating the design Q that is the original image of the aerial image P. A part of the light transmitted through the notches or the openings is reflected by the beam splitter 120 through the metamaterial layer 150, and then the light retroreflected by the retroreflective sheet 130 passes through the beam splitter 120 through the metamaterial layer 150, thereby re-forming the aerial image P of the design Q.

By filling the space between the beam splitter 120 and the retroreflective sheet 130 with the metamaterial layer 150, the refractive angle of the light transmitted through the beam splitter 120 becomes smaller than when the space is an air layer, and the aerial image P can be formed farther away from the aerial-image display device 100, that is, a floating distance Lb can be increased.

As a comparative example, a position of an aerial image P1 illustrated in FIG. 2 is an image forming position when there is an air layer between the beam splitter 120 and the retroreflective sheet 130 instead of the metamaterial layer 150. A floating distance La at the time is equivalent to a distance Lx, that is a distance between the beam splitter 120 and the retroreflective sheet 130 (or the design Q) (La = Lx). In contrast to this, a position of the aerial image P is an image forming position when the space of the distance Lx between the beam splitter 120 and the retroreflective sheet 130 is filled with the metamaterial layer 150. The floating distance Lb is longer than the floating distance La when the metamaterial layer 150 is not present (Lb > La). The floating distance Lb is generally determined in accordance with the refractive index of the metamaterial layer 150.

As a result, even when the distance Lx between the beam splitter 120 and the retroreflective sheet 130 is shortened, that is, even when the housing 110 is made thinner, the floating distance Lb of the aerial image P can be extended and a floating impression can be provided.

In another embodiment of the present embodiment, the light source 140 may include a polarizing plate or a polarizing filter and irradiate the back surface of the retroreflective sheet 130 with polarized light. In this case, a retardation film such as a λ/4 film is provided on a front surface side of the retroreflective sheet 130 and a polarized beam splitter is used for the beam splitter 120. The polarized beam splitter transmits a part of the light in a certain polarization state and reflects the rest. The polarization state of the polarizing plate or the polarizing film is determined in relation to the polarization state of the polarized beam splitter.

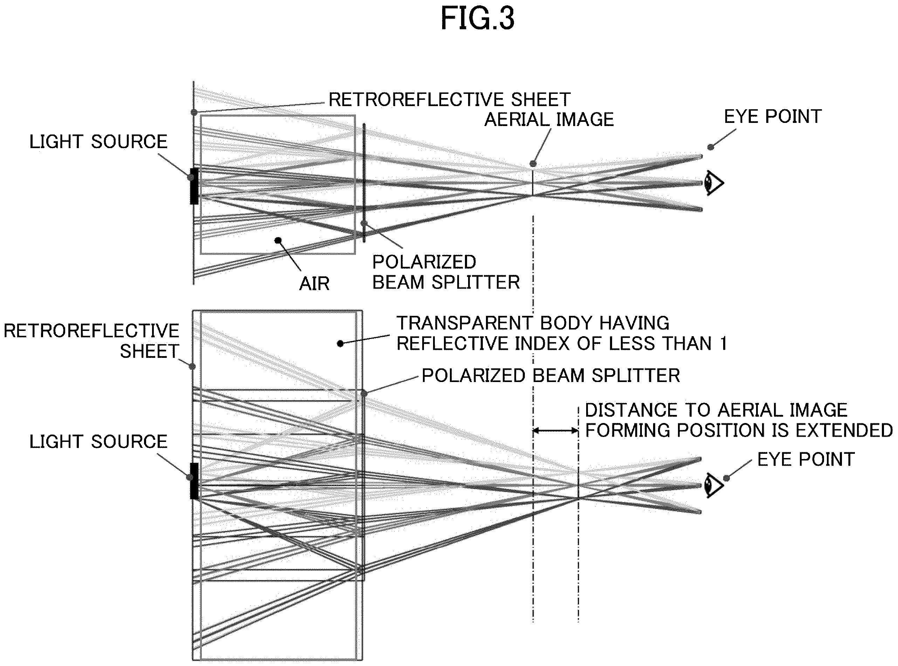

An upper diagram of FIG. 3 is a diagram illustrating a simulation result of an aerial image generated by an existing aerial-image display device, and a lower diagram is a diagram illustrating a simulation result of an aerial image generated by the aerial-image display device according to the present embodiment. In the existing aerial-image display device, there is a space between the retroreflective sheet and the polarized beam splitter that is an air layer, and from an eye point, an aerial image generated at a position with a floating distance equal to the thickness of the air layer is visible.

Whereas, in the aerial-image display device according to the present embodiment, by embedding a metamaterial layer, which is a transparent body having the refractive index of less than 1, in place of the air layer, an aerial image whose imaging position is farther away from the aerial-image display device as compared to that of the air layer is displayed, and from the eye point, an aerial image having a floating distance longer than that in a case of the air layer is visible.

The aerial-image display device according to the present embodiment can be applied to various devices for information display or user input, and can be applied to, for example, a computer, an in-vehicle electronic device, an ATM of a bank, a ticket purchasing machine at a station, an input button of an elevator, etc.

According to the present disclosure, by providing an intermediate layer having the refractive index of less than 1 between the optical member and the retroreflective member, a refractive angle of light passing through the optical member can be made smaller, and the aerial image can be imaged further away from the display device. Accordingly, while shortening a distance between the optical member and the retroreflective member to make the display device thinner, the floating distance of the aerial image can be increased.

Although embodiments of the present invention have been described in detail above, the present invention is not limited to a specific embodiment, and various changes and modifications can be made within the scope of the claims.

## Claims

1. A display device capable of displaying an aerial image by using retroreflection, the display device comprising:
an optical member configured to transmit a part of incident light and to reflect the rest of the incident light;
a retroreflective member that is arranged so as to face the optical member and having a notch or an opening for generating a design of an original image of an aerial image;
a light source configured to illuminate the retroreflective member from a back surface side; and
a transparent intermediate layer that is arranged between the optical member and the retroreflective member having a material with a refractive index of less than 1.

2. The display device according to claim 1, wherein
the transparent intermediate layer is formed of a metamaterial.

3. The display device according to claim 1 or 2, which is configured such that
the aerial image is displayed at a position floating over the optical member at a floating distance that corresponds to the refractive index of the transparent intermediate layer.

4. The display device according to one of claims 1 - 3, wherein
the optical member is a half mirror, a beam splitter, or a polarized beam splitter.
